# EUROPÄISCHE PATENTANMELDUNG

(11) **EP 1 142 486 A2**
(43) Veröffentlichungstag der Anmeldung: **10.10.2001**
(21) Anmeldenummer: 01108378.9
(22) Anmeldetag: 03.04.2001
(51) Int. Cl.: A23L 1/0524, A23P 1/02, C13F 3/00, A23P 1/04

(54) **Wirbelschichtverfahren zur Herstellung eines Gelierzuckers bestehend aus Zucker, gelbildenden Polysacchariden und Säuerungsmittel**

(30) Priorität: 05.04.2000 DE 10015906
(71) Anmelder: Braunschweigische Maschinenbauanstalt AG, 38122 Braunschweig (DE)
(72) Erfinder: Caspers, Gerald, 38527 Meine-Abbesbüttel (DE); Klein, Christian, Dr., 38300 Wolfenbüttel (DE); Krell, Lothar, Dr., 38173 Erkerode (DE); Mörle-Heynisch, Thomas, Dr., 29562 Suhlendorf (DE)
(74) Vertreter: Gramm, Werner, Prof. Dipl.-Ing.

(57) **Zusammenfassung**

1. Die Erfindung betrifft ein Verfahren zur Herstellung eines Gelierhilfsmittels (Gelierzucker) bestehend aus körnigen Zuckerteilchen, feinvermahlenen, gelbildenden Polysacchariden (nachfolgend "Pektin" genannt) und körnigem Säuerungsmittel. Zur Herstellung eines verklumpungsfreien, abriebfesten, entmischungsstabilen und lagerfähigen Produktes wird erfindungsgemäß vorgeschlagen, dass in einem Wirbelschichtverfahren im Durchlauf durch eine Vorrichtung die zugeführten Zuckerteilchen durch Luftbeaufschlagung von unten so fluidisiert werden, dass die Zuckerteilchen angehoben und in einem schwebenden Zustand bei einem Lückenvolumen in der Wirbelschicht von etwa 60 bis 70 % gehalten werden, wobei die Zukkerteilchen in einer ersten Fluidisierungszone von oben mit Wasser oder einer wässrigen Lösung bedüst und mit dem gleichzeitig zugeführten Pektin agglomeriert (Agglomerationszone) werden, das in einer zweiten Fluidisierungszone durch Bedüsung mit einem flüssigen Beschichtungsmaterial fixiert wird (Beschichtungszone), worauf in einer dritten Fluidisierungszone das aufgedüste Beschichtungsmaterial nachgetrocknet (Trocknungszone) und in einer letzten Fluidisierungszone die fixierten Zuckerteilchen mit einem körnigen Säuerungsmittel vermischt werden (Mischzone).

## Beschreibung

Die Erfindung betrifft ein Verfahren zur Herstellung eines Gelierhilfsmittels (nachfolgend "Gelierzucker" genannt) durch Überziehen von körnigen Zuckerteilchen mit feinvermahlenen, gelbildenden Polysacchariden (nachfolgend "Pektin" genannt).

Ein derartiges Verfahren lässt sich beispielsweise der DE-PS 1 275 853 entnehmen. Bei diesem vorbekannten Verfahren werden körniger Zucker und nieder- oder mittelverestertes Pektin, das auf eine Teilchengröße von 2 - 50 feinvermahlen worden ist, gemischt und unter Fortsetzung des Mischvorgangs kurzzeitig mit einer lediglich ein Klebrigwerden der Zuckeroberfläche bewirkenden Menge an Wasser, insbesondere Wasserdampf, behandelt. Dabei wird vorzugsweise zunächst eine Vorvermahlung aus dem niedrig- oder mittelveresterten Pektin und Zitronensäure oder einer anderen organischen Genusssäure hergestellt, worauf dann diese Vorvermahlung mit dem körnigen Zucker vereint wird. Bei Durchführung dieses Verfahrens besteht jedoch die Gefahr von Verklumpungen; der fertige Gelierzucker neigt überdies zu Entmischungserscheinungen und Inhomogenitäten.

In der DE-PS 1 800 141 wird ein vergleichbares Verfahren beschrieben, bei dem ein Gemisch aus einem Gewichtsteil Pektin auf 1 - 4 Gewichtsteile Zucker auf eine Korngröße von unter 100 Mikron gemahlen, durch Bedampfen zu einem schwammigen Produkt agglomeriert und dann getrocknet wird. Die Bedampfung erfolgt mit überhitztem Dampf in einem Bedampfungsrohr; die Trocknung des agglomerierten Produktes wird auf 96 - 98 % Trockensubstanz vorgenommen. Dabei kann dem Mahlgut Wein- und/oder Zitronensäure und ggf. Ascorbinsäure zugesetzt werden. Das agglomerierte Produkt wird im Fließbett durch Heißgase getrocknet. Jedoch hat sich in der Praxis gezeigt, dass auch dieser Gelierzucker zu Entmischungserscheinungen neigt.

Zur Lösung der vorstehend genannten Probleme wird in der DE 44 24 866 C1 ein Verfahren zur Herstellung eines Gelierhilfsmittels durch Überziehen von körnigen Zuckerteilchen mit feinvermahlenem Pektin vorgeschlagen, bei dem zunächst der Zucker mit 0,05 - 0,5 Gew.-% eines Öles und danach mit dem Pektin vermischt wird. Zusätzlich kann das Gelierhilfsmittel kristalline, pulverkörnige Komponenten wie Zitronensäure, Trikaliumcitrat und Kaliumsorbat enthalten, die zusammen mit den körnigen Zuckerteilchen mit dem Öl vermischt werden, das ein neutrales Pflanzenöl sein kann. Vom Verbraucher wird jedoch der Zusatz von Öl grundsätzlich als nachteilig empfunden; Entmischungserscheinungen konnten auch mit diesem Verfahren nicht vollständig behoben werden.

Zur Herstellung eines lagerfähigen und entmischungsstabilen Produktes schlägt die DE 197 49 820 C1 ein Verfahren zur Herstellung einer Geliermittelmischung aus Pektin, einer Genusssäure und einem Disaccharidalkohol-Gemisch vor, bei dem das Pektin in einem ersten Verfahrensschritt mit dem Disaccharidalkohol-Gemisch gemischt und in einem zweiten Verfahrensschritt die Genusssäure hinzugegeben wird. Nach dem ersten Verfahrensschritt kann das Pektin und das Disaccharidalkohol-Gemisch mit einem Hüllstoff in auf über den Schmelzpunkt des Hüllstoffs erwärmter Form gemischt werden, wobei als Hüllstoff ein gehärtetes Pflanzenfett eingesetzt werden kann. Dabei soll das Pektin mit dem Hüllstoff besprüht werden; das Disaccharidalkohol-Gemisch wird anschließend bei erhöhter Temperatur dazugegeben, und nach Abkühlen werden die anderen Komponenten zusammengemischt. Als Pektin wird ein amidiertes Pektin und als Genusssäure Zitronensäure, Milchsäure, Weinsäure, D-Äpfelsäure, L-Äpfelsäure, DL-Äpfelsäure, L-Ascorbinsäure, Bernsteinsäure, Gluconsäure oder Glucono-delta-Lacton verwendet.

Die DD 265 787 A1 offenbart ein Verfahren zur Herstellung von Nonpareille in einer Wirbelschicht sowie zur Herstellung von Streukügelchen, Liebesperlen, Pillen, kugelähnlichen Mehrstoffgemischen. In einer Wirbelschicht wird ein Keimgut, wie z.B. Kristallzucker, mit einem Korndurchmesser von 0,2 bis 1,2 mm mittels eines Fluidisierungsmediums mit einer Temperatur von 15° bis 50° C fluidisiert; zeitgleich und parallel wird ein Auftragssaft, z. B. Sirupe, siruphaltige Zuckerlösungen, Wasser u.a. auf das Keimgut aufgedüst; zeitgleich und parallel wird ein Auftragsstoff, vorzugsweise ein pulvriger Feststoff mit einer Korngröße kleiner 0,05 mm aufgebracht. Dabei wird das Wirbelbett durch einen direkt über dem Anströmboden angeordneten Rührer unterstützt und die Wirbelschicht im Lockerungspunkt mit einer Geschwindigkeit des Fluidisierungsmediums von anfangs vorzugsweise 0,3-0,5 bis etwa 0,8-1,5 m/s im Verlaufe des Schichtaufbaus ansteigend in einem chargenweise arbeitenden Wirbelschichtapparat geführt, wobei das Erzeugnis einen Masseanteil des Keimgutes von vorzugsweise 20 %, des Auftragsstoffes von vorzugsweise 60 %, des Lösungsmittels des Auftragssaftes von vorzugsweise 5 % des Feststoffanteils des Auftragssaftes von vorzugsweise 15 %, bezogen auf das Erzeugnis, aufweist. Im Anschluss an die Kornvergrößerung im Wirbelschichtapparat bis auf einen mittleren Durchmesser von etwa 1,2 mm und Klassieren mittels einer Siebmaschine können die beschichteten Zuckerkörner in demselben Wirbelschichtapparat auf die gleiche beschriebene Art und Weise durch Aufsprühen des genannten Auftragssaftes und Einblasen von Maispuder pulverbeschichtet und geglättet werden.

Bei diesem vorbekannten Verfahren wird jedoch keine stationäre Wirbelschicht erzeugt. Denn bei einem mittleren Keimgutdurchmesser von 0,65 mm und einer Anfangs-Luftgeschwindigkeit von 0,4 m/s ergibt sich mit den aus der Literatur bekannten Kriterialgleichungen ein relatives Zwischenraumvolumen von Epsilon = 0,467. Dieser Wert liegt nur geringfügig über dem Wert von maximal 0,42 für eine unbewegte Schüttschicht. Die unzureichende Durchströmung und Umwälzung des Keimgutes soll daher bei diesem vorbekannten Verfahren durch Einsatz eines Rührers in der Produktschicht vermieden werden. Es handelt sich bei diesem Verfahren also genau genommen nicht um eine Wirbelschicht sondern um eine vorrangig mechanisch mittels Rührer bewegte Schüttschicht, die mit Luft durchströmt wird.

Die DE 28 51 627 A1 offenbart ein Verfahren zur Agglomeration pulverförmiger Feststoffe in einem wässrigen Medium. Dabei handelt es sich insbesondere um ein Verfahren zum Vermischen eines festen, pulverförmigen Kohlenhydrats mit Wasser, einem wässrigen Sirup oder einer Kohlenhydratlösung und zwar unter solchen Bedingungen, dass ein trocknes, freifließendes Agglomerat erhalten wird. Dieses Verfahren soll insbesondere zur Herstellung von trocknen, freifließenden Sucrose- und Invertzucker-Agglomeraten als Trockenfondants geeignet sein, die durch Zugabe von Wasser leicht und rasch wieder gebrauchsfertig sind. Als pulverförmiger Feststoff wird ein Kohlenhydrat verwendet, der pneumatisch in einem Gasstrom befördert wird, und auf den das wässrige Medium in einer Sprühzone versprüht wird. Das so erhaltene Gemisch aus wässrigem Medium und pulverförmigem Feststoff wird in dem Gasstrom während eines für die Agglomeration ausreichenden Zeitraums gehalten. Die Entnahme der Agglomerate aus der Sprühzone erfolgt durch pneumatische Förderung mit dem Gasstrom.

Die DE 35 16 111 A1 offenbart eine Gelierhilfe sowie ein Verfahren zu dessen Herstellung. Dabei besteht die Gelierhilfe aus körnigem Zucker, damit oberflächlich verklebtem feinvermahlenem Hydrocolloid und einer kristallinen Genusssäure, die etwa den gleichen Körnungsgrad aufweist wie der Zucker und mit einer bei Temperaturen über 50° C erweichenden hydrophoben Schicht überzogen ist. Gemäß dem zur Herstellung dieser Gelierhilfe offenbarten Verfahren wird in einem Mischer zunächst der körnige Zucker mit dem Hydrocolloid verklebt und dann die hydrophobierte Säure zugegeben. Dann werden in einem Wirbelbett-Trockner mit einer Heizzone und einer Kühlzone in der Heizzone Restfeuchtigkeit aus der Zuckerkomponente entzogen und in der Kühlzone die Säurekomponente mit der Zuckerkompente verklebt.

Der Erfindung liegt die Aufgabe zugrunde, ein Verfahren zur Herstellung eines Gelierzuckers zu entwickeln, das unter Vermeidung von Verklumpungen zu einem abriebfesten, entmischungsstabilen und lagerfähigen Produkt führt.

Ausgehend von dem eingangs beschriebenen Verfahren wird diese Aufgabe erfindungsgemäß dadurch gelöst, dass in einem Wirbelschichtverfahren im Durchlauf durch eine Vorrichtung die zugeführten Zuckerteilchen durch Luftbeaufschlagung von unten so fluidisiert werden, dass die Zuckerteilchen angehoben und in einem schwebenden Zustand bei einem Lückenvolumen in der Wirbelschicht von etwa 60 bis 70 % gehalten werden, wobei die Zuckerteilchen in einer ersten Fluidisierungszone von oben mit Wasser oder einer wässrigen Lösung bedüst und mit dem gleichzeitig zugeführten Pektin agglomeriert (Agglomerationszone) werden, das in einer zweiten Fluidisierungszone durch Bedüsung mit einem flüssigen Beschichtungsmaterial fixiert wird (Beschichtungszone), worauf in einer dritten Fluidisierungszone das aufgedüste Beschichtungsmaterial nachgetrocknet (Trocknungszone) und in einer letzten Fluidisierungszone die fixierten Zuckerteilchen mit einem körnigen Säuerungsmittel wie z. B. Zitronensäure vermischt werden (Mischzone).

Für die zu überziehenden Zuckerteilchen können Weisszucker, Rohzucker bzw. Zuckeralkohole verwendet werden.

Ein zweckmäßiger Fluidisierungsgrad ergibt sich bei einem Lückenvolumen in der Wirbelschicht von etwa 60 - 70 %. Die Fluidisierung führt einerseits zu einer gleichmäßigen Oberflächenbenetzung der Zuckerteilchen und zum anderen zu einer gleichmäßigen Abdeckung der Zuckerteilchenoberfläche durch anhaftenden Pektinstaub, worunter weniger der reine Stoff als vielmehr eine Formulierung aus gelbildenden Polysacchariden und Zutaten wie Sacchariden zu verstehen ist. Die zur Fluidisierung von unten in die Wirbelschicht eingeblasene nichterwärmte Frischluft trocknet die überschüssige Feuchtigkeit ab und verhindert somit eine Verklumpung der auf ihrer Oberfläche gleichmäßig mit Pektinstaub bedeckten Zuckerteilchen. Bei dem aufgedüsten Wasser bzw. wässrigen Lösung kann es sich um Trinkwasser, entionisiertes Wasser oder aber auch um eine wässrige Zuckerlösung handeln. Als Pektin werden z. B. niederveresterte Pektine eingesetzt.

Durch die nachfolgende, ebenfalls im Wirbelschichtverfahren durchgeführte Beschichtung wird das gleichmäßig an den Zuckerteilchenoberflächen anhaftende Pektin mit Beschichtungsmaterial fixiert und somit vor Abrieb geschützt. Dieser Schutz wird auch nicht beeinträchtigt durch die anschließend zugemischte Zitronensäure oder dergleichen.

Um eine gleichmäßige und schnelle Verteilung des Pektin in der durch die Zuckerteilchen gebildeten Wirbelschicht zu erzielen, ist es zweckmäßig, wenn das Pektin pneumatisch in mehreren Teilströmen in den unteren Bereich der Wirbelschicht eingebracht wird.

Zur Erzielung eines geschlossenen Produktkreislaufs und zur Schonung der Umwelt ist es vorteilhaft, wenn aus der aus den Wirbelschichtzonen abgesaugten Abluft Pektin- und ggf. auch Zucker-Staub abgeschieden und in die Beschichtungszone zurückgeführt werden.

Der Beschichtungsprozess sowie die anschließende Trocknung des Produktes werden vorteilhaft beeinflusst, wenn die im Wirbelschichtverfahren durchgeführte Umhüllung in der Beschichtungszone und Trocknung in der Trocknungszone mit vorgewärmter Einblasluft durchgeführt werden.

Um eine exakte Zudosierung des Säuremittels vornehmen zu können, ist es zweckmäßig, wenn die Säurungsmittel-Mischzone intervallweise mit den Zuckerteilchen, an denen Pektin fixiert wurde, befüllt bzw. entleert wird.

Weitere Merkmale der Erfindung sind Gegenstand der Unteransprüche und werden in Verbindung mit einem Ausführungsbeispiel näher erläutert.

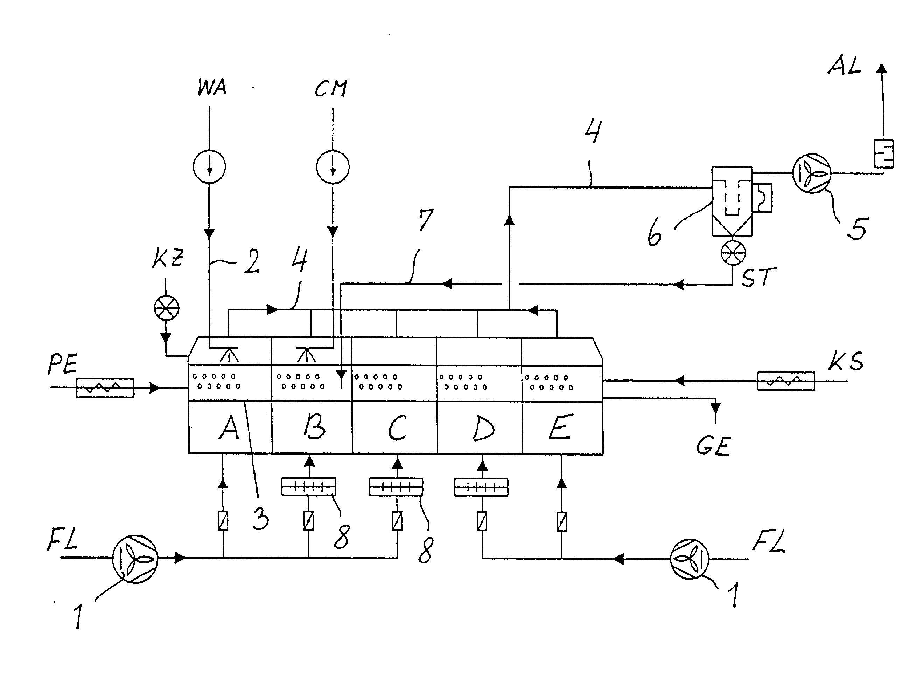

In der Zeichnung ist eine als Beispiel dienende Ausführungsform der Erfindung anhand eines technologischen Verfahrensschemas dargestellt.

Es handelt sich um die Herstellung eines Gelierhilfsmittels im Wirbelschichtverfahren, das fünf aufeinander folgende Verfahrensstufen aufweist, die als Agglomerationszone A, Beschichtungszone B, Trocknungszone C, Kühlungszone D und Mischzone E bezeichnet werden können. Die in diesem Wirbelschichtverfahren zu behandelnden körnigen Zuckerteilchen KZ bilden in den genannten Zonen eine Wirbelschicht, d.h. die körnigen Zuckerteilchen befinden sich in einem fluidisierten Zustand, der dadurch hervorgerufen wird, dass die zugeführten körnigen Zuckerteilchen von unten mit Luft beaufschlagt werden, die eine solche Geschwindigkeit aufweist, dass die Zuckerteilchen angehoben und in einem schwebenden Zustand gehalten werden, wodurch ein freier Zugang zu der Oberfläche der körnigen Zuckerteilchen und somit ein guter Stoff- und Wärmeübergang gewährleistet werden.

Trockene und auf eine Kornfraktion von 0,4 - 0,6 mm gesiebte Zuckerteilchen KZ werden kontinuierlich in die vorstehend genannte Agglomerationszone A eingespeist, in der sie von unten mit über ein Frischluftgebläse 1 eingeblasener Frischluft FL beaufschlagt werden. In einem bevorzugten Verfahren wird für die Zuckerteilchen KZ Weisszucker eingesetzt. Die Oberfläche der eingespeisten Zuckerteilchen wird mit Wasser bedüst; dies ist in der Zeichnung durch die Wasserzufuhr WA und eine Wasserzufuhrleitung 2 angedeutet. Über einen nicht näher dargestellten Regelkreis wird sichergestellt, dass die Austrittsluft über dieser Agglomerationszone A stets eine konstante Luftfeuchtigkeit besitzt. In einem bevorzugten Verfahren wird der Wasserdurchsatz so eingestellt, dass die relative Luftfeuchtigkeit einen Wert von 85 % annimmt.

Gleichzeitig wird im unteren Bereich der Wirbelschicht in unmittelbarer Nähe über dem Anströmboden 3 der Agglomerationszone A Pektinstaub PE in die befeuchtete Zuckerteilchen-Wirbelschicht eingeblasen. Obwohl dabei die herrschende Luftgeschwindigkeit über der Austragsgeschwindigkeit des Pektinstaubes liegt, wird dieser infolge der gleichmäßigen Benetzung der Oberflächen der Zuckerteilchen an diesen agglomeriert. Um eine schnelle, großflächige Einspeisung des Pektinstaubes zu erzielen, wird das Pektin pneumatisch in mehreren Teilströmen in den unteren Bereich der Wirbelschicht eingebracht. Dabei wird die Pektin-Zufuhr in Abhängigkeit vom Massenstrom der Zuckerteilchen so gesteuert, dass das Endprodukt einen Pektingehalt von 1 Masse-% aufweist

Die in der Agglomerationszone A eingesetzte Luftmenge besitzt in der Wirbelschicht eine Geschwindigkeit, die in einem bevorzugten Verfahren dem 9,5-fachen Wert der Wirbelpunktgeschwindigkeit für den d50-Durchmesser der eingesetzten Zuckerteilchen-Kornfraktion entspricht. Die Wirbelschichttemperatur wird dabei auf etwa 21°C eingestellt.

Etwaig vorhandene feine Zuckerteilchen und geringe Mengen an nicht agglomeriertem Pektin werden aus der Agglomerationszone A über eine Abluftleitung 4 von einem Abluftgebläse 5 ausgetragen und in einem in die Abluftleitung 4 geschalteten Abluftfilter 6 abgeschieden. Die in die Atmosphäre abströmende Abluft ist in der Zeichnung mit AL gekennzeichnet.

Das in der Agglomerationszone A aufgebrachte Pektin PE wird in der eingangs genannten Beschichtungszone B durch Aufsprühen eines flüssigen Beschichtungsmaterials CM fixiert. Dabei kann als flüssiges Beschichtungsmaterial eine kohlenhydrathaltige wässrige Lösung, z.B. untersättigte zuckerhaltige Lösung eingesetzt werden. In einem bevorzugten Verfahren wird eine Zuckerlösung mit einer Konzentration von 35 Massenprozent Zucker verwendet, wobei ein Massen-Verhältnis von Zuckerlösung und zugeführten trockenen Zuckerteilchen von 1 zu 100 eingehalten wird.

Der in dem vorstehend beschriebenen Abluftfilter 6 abgeschiedene Staub wird über eine Staubeinblasleitung 7 in die Beschichtungszone B eingeblasen und hier mit der Zuckerlösung an den Zuckerteilchen gebunden.

Die Fixierung in der Beschichtungszone erfolgt mit vorgewärmter Fluidisierungsluft. Die angesaugte Frischluft FL wird über einen Wärmetauscher 8 geleitet und mit einer Lufteintrittstemperatur von etwa 55°C in die Beschichtungszone B eingeblasen. Diese Lufteintrittstemperatur ist auf die Trocknung der Zuckerlösung ausgerichtet, wobei der Wert der Lufteintrittsgeschwindigkeit etwa dem in der Agglomerationszone A entspricht.

In der der Beschichtungszone B nachgeschalteten Trocknungszone C erfolgt eine schonende Nachtrocknung der in der Beschichtungszone aufgesprühten Zuckerlösung; zugleich wird eine Separation von agglomerierten und nicht agglomerierten Partikeln vorgenommen. Hierfür wird die angesaugte und über Wärmetauscher 8 geleitete Frischluft FL auf eine Lufteintrittstemperatur von etwa 55°C geregelt.

In der der Trocknungszone C nachgeschalteten Kühlungszone D erfolgt neben einer anfänglichen Nachtrocknung der Zuckerteilchen deren Kühlung, um die Produkttemperatur den nachfolgenden logistischen Prozessen anzupassen. Im Interesse einer schonenden Produktbehandlung wird die Luftmenge auf Werte im Bereich der 5-fachen Wirbelpunktgeschwindigkeit des d50-Durchmessers der eingesetzten Zukkerteilchen-Kornfraktion eingestellt. Die Lufteintrittstemperatur wird auf etwa 20°C eingeregelt.

In der das Ende des Wirbelschichtverfahrens definierenden Mischzone E wird der Gelierzucker neben einer weiteren Kühlung durch Zugabe eines körnigen Säuerungsmittels KS rezepturgerecht fertiggestellt. Die Mischzone E ist sowohl gegenüber der Kühlungszone D als auch gegenüber dem Gelierzucker-Austritt GE durch vorzugsweise pneumatisch betätigbare Klappwehre verschlossen. Durch deren Steuerung wird die Mischzone E intervallweise mit fixierten Zuckerteilchen befüllt und geleert. Im befüllten Zustand erfolgt eine Zudosierung des Säuerungsmittels KS derart, dass das Endprodukt Säuerungsmittel mit einem Masseanteil von 0,1 - 3 % aufweist. In einem bevorzugten Verfahren werden in die befüllte Mischzone E als Säuerungsmittel Zitronensäurekristalle mit einem Anteil von 1 % bezogen auf das Fertigprodukt pneumatisch eingetragen.

Der getrocknete und gekühlte Gelierzucker GE verlässt das Wirbelschichtverfahren intervallweise.

Die in der Agglomerationszone A und/oder Beschichtungszone B für die Bedüsung der Zuckerteilchen eingesetzten Flüssigkeiten können Konservierungsstoffe enthalten.

## Patentansprüche

1. Verfahren zur Herstellung eines Gelierhilfsmittels (Gelierzucker) bestehend aus körnigen Zuckerteilchen, feinvermahlenen, gelbildenden Polysacchariden (nachfolgend "Pektin" genannt) und körnigem Säuerungsmittel, **dadurch gekennzeichnet, dass** in einem Wirbelschichtverfahren im Durchlauf durch eine Vorrichtung die zugeführten Zuckerteilchen durch Luftbeaufschlagung von unten so fluidisiert werden, **dass** die Zuckerteilchen angehoben und in einem schwebenden Zustand bei einem Lückenvolumen in der Wirbelschicht von etwa 60 bis 70 % gehalten werden, wobei die Zuckerteilchen in einer ersten Fluidisierungszone von oben mit Wasser oder einer wässrigen Lösung bedüst und mit dem gleichzeitig zugeführten Pektin agglomeriert (Agglomerationszone) werden, das in einer zweiten Fluidisierungszone durch Bedüsung mit einem flüssigen Beschichtungsmaterial fixiert wird (Beschichtungszone), worauf in einer dritten Fluidisierungszone das aufgedüste Beschichtungsmaterial nachgetrocknet (Trocknungszone) und in einer letzten Fluidisierungszone die fixierten Zuckerteilchen mit einem körnigen Säuerungsmittel vermischt werden (Mischzone).

2. Verfahren nach Anspruch 1, **dadurch gekennzeichnet, dass** die Mischzone intervallweise mit den Zuckerteilchen, an denen Pektin fixiert wurde, befüllt bzw. entleert wird, wobei die mittlere Teilchengröße des Säuerungsmittels etwa der der Zuckerteilchen entspricht.

3. Verfahren nach Anspruch 1 oder 2, **dadurch gekennzeichnet, dass** der Mischzone eine Fluidisierungszone zum Kühlen der fixierten Zuckerteilchen vorgeschaltet ist (Kühlzone),

4. Verfahren nach Anspruch 1, 2 oder 3, **dadurch gekennzeichnet, dass** das Pektin pneumatisch in mehreren Teilströmen in den unteren Bereich der Wirbelschicht eingebracht wird

5. Verfahren nach einem der vorhergehenden Ansprüche, **dadurch gekennzeichnet, dass** die Pektin-Zufuhr in Abhängigkeit vom Massenstrom der Zuckerteilchen so gesteuert wird, **dass** das Endprodukt einen Pektingehalt im Bereich von 0,5 bis 3 Masse-% aufweist.

6. Verfahren nach einem der vorhergehenden Ansprüche, **dadurch gekennzeichnet, dass** aus der aus den Fluidisierungszonen abgesaugten Abluft Pektin- und ggf. auch Zucker-Staub abgeschieden und vorrangig in die Beschichtungszone zurückgeführt werden.

7. Verfahren nach einem der vorhergehenden Ansprüche, **dadurch gekennzeichnet, dass** die im Wirbelschichtverfahren durchgeführte Fixierung in der Beschichtungszone und die Trocknung in der Trocknungszone mit vorgewärmter Fluidisierungsluft durchgeführt werden.

8. Verfahren nach Anspruch 7, **dadurch gekennzeichnet, dass** Frischluft angesaugt, über Wärmetauscher geleitet und dann zur Fluidisierung der Zuckerteilchen eingeblasen wird.

9. Verfahren nach einem der vorhergehenden Ansprüche, **gekennzeichnet durch** eine Zudosierung des Säuerungsmittels derart, dass das Endprodukt Säuerungsmittel mit einem Masse-Anteil von 0,1 bis 3 % aufweist.

10. Verfahren nach einem der vorhergehenden Ansprüche, **dadurch gekennzeichnet, dass** die in der Agglomerationszone einzudüsende Menge an Wasser oder wässriger Lösung so eingestellt wird, **dass** die relative Feuchte der Abluft aus dieser Agglomerationszone einen Wert zwischen 50 und 92 % aufweist.

11. Verfahren nach einem der vorhergehenden Ansprüche, **dadurch gekennzeichnet, dass** die in der Beschichtungszone einzudüsende Menge an flüssigem Beschichtungsmaterial so eingestellt wird, **dass** der Trockensubstanz-Gehalt der Beschichtung auf den Zuckerteilchen im Bereich von 0,1 bis 5 % der in die Agglomerationszone zugeführten Masse an Zuckerteilchen entspricht.

12. Verfahren nach einem der vorhergehenden Ansprüche, **dadurch gekennzeichnet, dass** als flüssiges Beschichtungsmaterial eine kohlenhydrathaltige wässrige Lösung eingesetzt wird.

13. Verfahren nach einem der vorhergehenden Ansprüche, **dadurch gekennzeichnet, dass** die in der Agglomerationszone und/oder Beschichtungszone für die Bedüsung der Zuckerteilchen eingesetzten Flüssigkeiten Konservierungsstoffe enthalten.

14. Verfahren nach einem der vorhergehenden Ansprüche, **dadurch gekennzeichnet, dass** für die zu überziehenden Zuckerteilchen Weisszucker, Rohzucker, bzw. Zuckeralkohole verwendet werden.

15. Verfahren nach einem der vorhergehenden Ansprüche, **gekennzeichnet durch** die Verwendung von Zitronensäure als körniges Säuerungsmittel.

16. Verfahren nach einem der vorhergehenden Ansprüche, **gekennzeichnet durch** die Verwendung einer untersättigten zuckerhaltigen Lösung als kohlenhydrathaltige wässrige Lösung.
